# EUROPÄISCHE PATENTSCHRIFT

(11) **EP 1 218 106 B1**
(45) Veröffentlichungstag und Bekanntmachung des Hinweises auf die Patenterteilung: **26.03.2003**
(21) Anmeldenummer: 00972687.8
(22) Anmeldetag: 05.10.2000
(51) Int. Cl.: B01L 3/00, G01N 21/25

(54) **VORRICHTUNG UND VERFAHREN ZUR QUALITÄTSKONTROLLE VON AUF EIN SUBSTRAT AUFGEBRACHTEN MIKROTRÖPFCHEN**
DEVICE AND METHOD FOR CONTROLLING THE QUALITY OF MICRODROPLETS DEPOSITED ON A SUBSTRATE
DISPOSITIF ET PROCEDE DE CONTROLE DE LA QUALITE DE MICROGOUTTELETTES DEPOSEES SUR UN SUBSTRAT

(30) Priorität: 05.10.1999 DE 19947878
(43) Veröffentlichungstag der Anmeldung: 03.07.2002
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: BESEKI, Stefan, 78054 Villingen-Schwenningen (DE); GRUHLER, Holger, 78609 Tuningen (DE); ZENGERLE, Roland, 79183 Waldkirch (DE)
(74) Vertreter: Schoppe, Fritz, Dipl.-Ing.
(86) Internationale Anmeldenummer: EP0009773
(87) Internationale Veröffentlichungsnummer: WO01024932

(56) Entgegenhaltungen:
- US-A- 5 373 964
- US-A- 5 508 200
- US-A- 5 847 105

## Beschreibung

Die vorliegende Erfindung bezieht sich auf eine Vorrichtung und ein Verfahren zur Qualitätskontrolle von auf ein Substrat aufgebrachten Mikrotröpfchen, und insbesondere eine solche Vorrichtung und ein solches Verfahren, die zur Qualitätskontrolle bei der Herstellung sogenannter Mikroarrays geeignet sind. Als Mikroarray bezeichnet man eine regelmäßige Anordnung von Mikrotröpfchen in flüssiger oder eingetrockneter Form auf einem Substrat. Die gesamte Anordnung, d.h. das Substrat mit dem aufgedruckten Mikroarray, wird häufig als Biochip bezeichnet. Die Mikrotröpfchen bestehen in der Regel aus einer Trägerlösung mit darin gelösten Substanzen. Die einzelnen Mikrotröpfchen eines Mikroarrays unterscheiden sich in der Regel durch die in den Tröpfchen gelösten Substanzen.

Ein derartiger Biochip kann im wesentlichen als ein hochparalleles Analyseinstrument betrachtet werden, bei dem eine Mehrzahl bekannter Stoffe auf ein Trägersubstrat aufgebracht sind, wobei die bekannten Stoffe eine spezifische Reaktion mit einem definierten anderen Stoff eingehen können. Bringt man nun eine unbekannte Probe mit dem Biochip in Kontakt, so werden einzelne der verschiedenen Punkte des auf demselben befindlichen Mikroarrays mit der Probenflüssigkeit reagieren. Durch eine Analyse des Reaktionsmusters auf einem derartigen Biochip können Rückschlüsse auf die in der unbekannten Probe enthaltenen Inhaltsstoffe gezogen werden. Die Vielfalt der auf einen Biochip aufgebrachten, unterschiedlichen Substanzen steht damit in direktem Zusammenhang mit der Vielzahl von Analysen, die gleichzeitig, d.h. parallel, mit diesem Biochip durchgeführt werden können.

Aufgrund des Einsatzes dieser Biochips als Analytik- und Diagnostik-Instrumente wird deutlich, daß eine laufende Qualitätskontrolle bei der Herstellung dieser Biochips von entscheidender Bedeutung ist.

Zum Aufbringen der unterschiedlichen Substanzen auf das Trägersubstrat werden im wesentlichen drei unterschiedliche Techniken verwendet, nämlich eine Online-Synthese, ein Kontaktdrucken oder ein sogenanntes "Spotting", bei dem über einen Dispenser die einzelnen Punkte des Mikroarrays erzeugt werden. Nach dem Aufbringen der Mikrotröpfchen trocknen dieselben ein, wobei die in der Flüssigkeit gelösten Stoffe auf der Substratoberfläche zurückbleiben. Bringt man das Substrat in eine feuchte Atmosphäre ein, so daß die Feuchtigkeit an den Orten der aufgebrachten Substanzen kondensiert, lassen sich die Mikrotröpfchen in der ursprünglichen Form wieder herstellen.

Bei einer Qualitätskontrolle während der Herstellung dieser Biochips geht es nun darum, nach dem Aufbringen der Mikrotröpfchen festzustellen, ob und wo dieselben in einem Mikroarray erzeugt wurden.

Es ist beispielsweise bekannt, die Qualitätskontrolle über eine automatische Bilderkennung durchzuführen, bei der das Bild der Mikrotröpfchen auf dem Träger von oben mit einer CCD-Kamera aufgenommen und dann ausgewertet wird. Aus dieser Aufnahme können das Vorhandensein bzw. die genaue räumliche Position jedes einzelnen Mikrotröpfchens in einem Mikroarray bestimmt werden. Jedoch hängt die Funktionssicherheit einer derartigen Bildverarbeitung stark von dem Kontrast ab, mit dem sich die Mikrotröpfchen von dem umgebenden Hintergrund abheben. Überdies lassen sich Verunreinigungen, wie z.B. Staubpartikel, im allgemeinen nur sehr schwer oder gar nicht von den Mikrotröpfchen unterscheiden, oder täuschen Satellitentröpfchen vor. Der konventionelle Aufbau einer derartigen Bildverarbeitung führt also häufig zu Fehlern bei der Prozeßkontrolle durch eine mangelhafte Qualitätskontrolle.

Aus der US-5,508,200 sind Verfahren und Vorrichtungen zum Durchführen chemischer Analysen bekannt. dabei werden zunächst chemische Reaktionen zwischen unterschiedlichen Reaktionsstoffen an unterschiedlichen Orten eines Testbereichs auf einem Analyseträger bewirkt. Daraufhin wird ein vollständiges digitales Bild des Testbereichs aufgenommen und verarbeitet, um quantitative Testergebnisse bezüglich der Probenreaktionen an den unterschiedlichen Orten des Testbereichs als eine Funktion von optischen Änderungen, die an den unterschiedlichen Orten in dem Testbereich aufgetreten sind, zu erhalten.

Die Aufgabe der vorliegenden Erfindung besteht darin, eine kostengünstige und funktionssichere Vorrichtung und ein kostengünstiges und funktionssicheres Verfahren zur Qualitätskontrolle von auf ein Substrat aufgebrachten Mikrotröpfchen zu schaffen.

Diese Aufgabe wird durch eine Vorrichtung nach Anspruch 1 und ein Verfahren nach Anspruch 8 gelöst.

Die vorliegende Erfindung basiert auf der Erkenntnis, daß die Lichtbrechung an gekrümmten Flüssigkeitsoberflächen geschickt ausgenutzt werden kann, um eine Qualitätskontrolle von auf ein transparentes bzw. lichtdurchlässiges Substrat oder auf ein reflektierendes Substrat aufgebrachten Mikrotröpfchen durchzuführen. Dabei ist durch die Ausnutzung der Lichtbrechung der Kontrast des aufgenommenen Bildes verbessert, da die Mikrotröpfchen in dem aufgenommenen Bild in Form eines Musters von sehr dunklen Punkten zu erkennen sind.

Dabei wird ausgenutzt, daß Mikrotröpfchen unabhängig von kleinen Unterschieden bei verschiedenen Materialkombinationen immer eine konvex gekrümmte Oberfläche aufweisen, wobei diese konvex gekrümmte Oberfläche bezüglich der Lichtbrechung ähnliche Eigenschaften wie eine konvexe Linse aufweist. Die durch eine solche konvexe Linse erzeugte starke optische Brechung von Licht an einem Flüssigkeitströpfchen läßt sich, wie oben angegeben, nutzen, um sehr kontrastreiche Aufnahmen der Mikrotröpfchen zu erzeugen.

Mit anderen Worten wird erfindungsgemäß der Effekt genutzt, daß Mikrotröpfchen mit immer kleiner werdendem Durchmesser eine immer stärkere Krümmung der Oberfläche aufweisen. Diese Mikrotröpfchen mit der gekrümmten Oberfläche können, wie bereits oben ausgeführt, als Mikrolinsen betrachtet werden, da aufgrund der unterschiedlichen Brechungsindizes an der Grenzfläche zwischen der Flüssigkeit und der umgebenden Luft das Licht gebrochen wird. Je stärker die Krümmung, also je kleiner das Tröpfchen, desto kürzer ist auch die Brennweite dieser Mikrolinsen.

Bei den erfindungsgemäßen Anwendungen ist die Brennweite der Mikrotröpfchen gegenüber der Entfernung der Bildaufnahmevorrichtung vernachlässigbar. Licht, das von unten durch die Tröpfchen fällt, wird daher in den gesamten oberen Halbraum verteilt. Die Bilderzeugungsvorrichtung ist beispielsweise so weit entfernt von den Tröpfchen angeordnet, daß sie nur einen sehr kleinen Ausschnitt, d.h. einen Ausschnitt mit einem kleinen Raumwinkel dieses Halbraums detektiert. Von der Bilderzeugungseinrichtung her betrachtet bedeutet dies, daß die Mikrotröpfchen dunkel erscheinen im Vergleich zur Umgebung.

Kontrastreiche Aufnahmen können erreicht werden, wenn ein transparentes Substrat als Träger für beispielsweise einen Biochip verwendet wird, auf das ein Mikroarray aufgebracht ist. Dieses transparente Substrat mit dem aufgebrachten Mikroarray wird in den Strahlengang zwischen einer homogenen, räumlich ausgedehnten Lichtquelle und einer Bilderzeugungsvorrichtung gebracht, so daß die Bilderzeugungsvorrichtung an den Stellen, an denen keine Mikroflüssigkeitströpfchen aufgebracht sind, einen weißen Hintergrund sieht, während an den anderen Stellen, an denen Mikrotropfen vorliegen, das Licht gebrochen wird. Dadurch ergibt sich zum einen ein sehr kontrastreiches Bild, in dem Mikrotröpfchen als Muster schwarzer Punkte zu erkennen sind.

Alternativ können Lichtquelle und Bilderzeugungseinrichtung auf denselben Seiten eines reflektierenden Substrats angeordnet sein, so daß die Bilderzeugungseinrichtung von dem Substrat reflektiertes Licht empfängt.

Daneben ist es möglich, Mikrotröpfchen sehr gut von Festkörperpartikeln, beispielsweise Staubpartikeln zu unterscheiden, indem ausgenutzt wird, daß die Mikrotröpfchen die gesamte Umgebung in die Bilderzeugungsvorrichtung abbilden, so daß sie unter anderem auch die Lichtquelle abbilden, die als kleiner Lichtpunkt in der Mitte eines als dunkler Fleck in dem Bild dargestellten Mikrotröpfchens erkennbar ist. Staubpartikel mit einem definierten zentrischen Loch, das ebenfalls einen solchen kleinen Lichtpunkt erzeugen würde, sind extrem unwahrscheinlich, so daß durch den oben genannten Effekt flüssige Objekte eindeutig von Festkörpern unterschieden werden können.

Die erfindungsgemäße Vorrichtung und das erfindungsgemäße Verfahren eignen sich vorteilhaft zur Online-Qualitätskontrolle, indem die Analyse des durch die Bilderzeugungseinrichtung erzeugten Bilds automatisch mittels einer Bildverarbeitungseinrichtung durchgeführt wird, die vorteilhaft in der Lage ist, das Vorliegen von Mikrotröpfchen auf der Grundlage der oben beschriebenen speziellen Muster, die durch dieselben bei der erfindungsgemäßen Vorgehensweise erzeugt werden, zu erkennen. Dadurch ermöglicht die vorliegende Erfindung ein zum einen kostengünstig und zum anderen funktionssicheren System zur Qualitätskontrolle von auf ein Substrat aufgebrachten Mikrotröpfchen. Das Substrat kann transparent, reflektierend oder teilweise transparent bzw. reflektierend sein. Die vorliegende Erfindung ist insbesondere zur Qualitätskontrolle bei der Herstellung von Biochips vorteilhaft einsetzbar.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Querschnittansicht zur Erläuterung des durch die vorliegende Erfindung ausgenutzten Effekts;
- Fig. 2: eine schematische Darstellung eines Ausführungsbeispiels einer erfindungsgemäßen Vorrichtung;
- Fig. 3: eine schematische Darstellung eines von einem transparenten Substrat, auf das Mikrotröpfchen aufgebracht sind, erzeugten Bildes; und
- Fig. 4: eine schematische Darstellung eines weiteren Ausführungsbeispiels einer erfindungsgemäßen Vorrichtung.

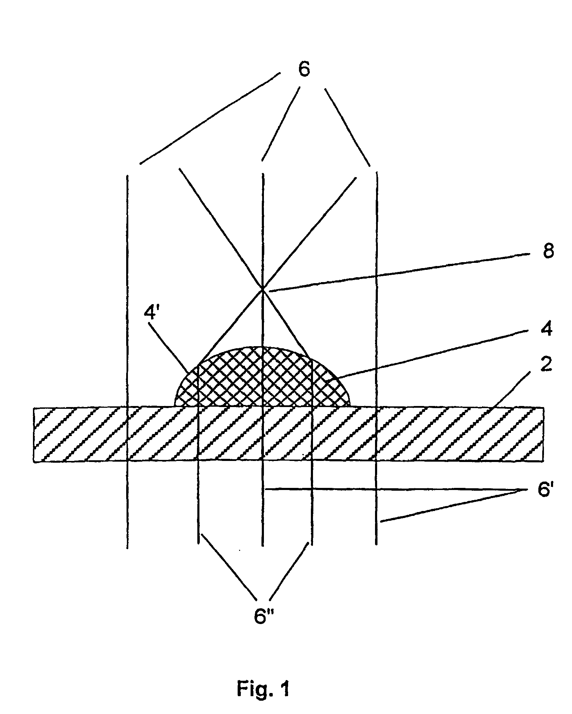

Bezugnehmend auf Fig. 1 wird nun zunächst der durch die vorliegende Erfindung ausgenutzte Effekt erläutert. Zu diesem Zweck ist in Fig. 1 ein transparentes Substrat 2 gezeigt, wobei auf eine Oberfläche desselben ein Mikrotröpfchen 4 aufgebracht ist. Das Mikrotröpfchen 4 kann beispielsweise ein Mikrotröpfchen eines Mikroarrays eines Biochips sein, wobei das transparente Substrat 2 dann das Trägersubstrat des Biochips darstellt. Mit dem Bezugszeichen 6 sind in Fig. 1 Lichtstrahlen bezeichnet, die von einer homogenen, räumlich ausgedehnten Lichtquelle erzeugt werden. Homogene Lichtquellen, die die Erzeugung derartiger paralleler Lichtstrahlen 6 ermöglichen, sind auf dem Gebiet der Technik bekannt.

Wie in Fig. 1 gezeigt ist, besitzt das Mikrotröpfchen 4, d.h. das Flüssigkeitströpfchen, auf dem Substrat 2 eine konvex gekrümmte Oberfläche 4'. Hierbei ist anzumerken, daß die genaue Form der Oberfläche eines Flüssigkeitströpfchens 4 auf einem Substrat 2 von der Oberflächenspannung der Flüssigkeit sowie den Oberflächeneigenschaften des Substratmaterials abhängt. Jedoch liegt unabhängig von kleinen Unterschieden bei verschiedenen Materialkombinationen immer eine konvex gekrümmte Oberfläche 4' vor.

Diese konvex gekrümmte Oberfläche 4' besitzt bezüglich der Lichtbrechung ähnliche Eigenschaften wie eine konvexe Linse, wie durch den in Fig. 1 dargestellten Brennpunkt 8 verdeutlicht ist. Je kleiner die Mikrotröpfchen auf dem Substrat sind, desto stärker ist die Krümmung der Oberfläche 4' und desto stärker ist somit der Linseneffekt. Durch diesen Linseneffekt ergeben sich neben ungebrochenen Lichtstrahlen 6' gebrochene Lichtstrahlen 6'', die durch die gekrümmte Oberfläche 4' erzeugt werden.

Diese starke optische Brechung von Licht an einem Flüssigkeitströpfchen, wie sie oben bezugnehmend auf Fig. 1 beschrieben wurde, kann nun genutzt werden, um sehr kontrastreiche Aufnahmen von Mikrotröpfchen zu erzeugen.

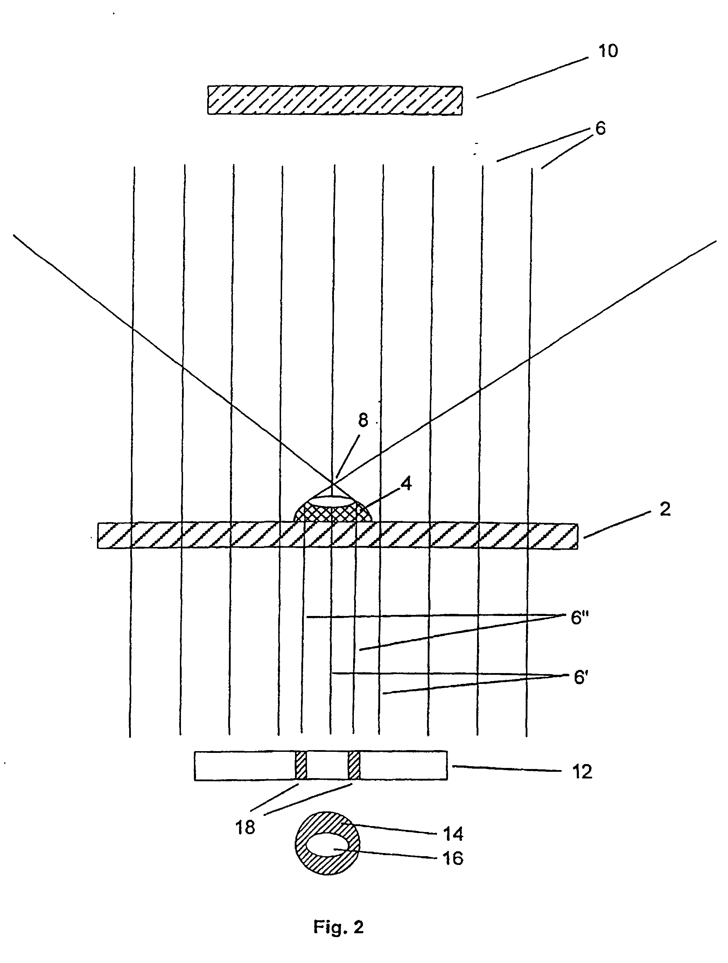

Ein Ausführungsbeispiels eines hierzu notwendigen Aufbaus ist beispielhaft in Fig. 2 gezeigt. Dieser Aufbau besitzt eine Lichtquelle 10, die parallele Lichtstrahlen 6 erzeugt, in deren Strahlengang des transparente Substrat 2, auf das ein Mikrotröpfchen 4 aufgebracht ist, eingebracht wird. Die Lichtquelle 10 erzeugt eine homogene, räumlich ausgedehnte Beleuchtung.

Die homogene, räumlich ausgedehnte Lichtquelle kann eine beliebige bekannte Lichtquelle sein, die in der Lage ist, parallele Lichtstrahlen 6 zu erzeugen. Ferner kann die Lichtquelle 10 beliebige Optiken zur Erzeugung derartiger Lichtstrahlen umfassen.

Wiederum ist in Fig. 2 der Brennpunkt 8 der konvex gekrümmten Oberfläche 4' des Mikrotröpfchens 4, die einen Linseneffekt bewirkt, dargestellt. Darüberhinaus sind in Fig. 2 wiederum gebrochene Lichtstrahlen 6'' und ungebrochene Lichtstrahlen 6' gezeigt.

Auf der der Lichtquelle 10 gegenüberliegenden Seite des transparenten Substrats 2 ist ein optischer Detektor 12 angeordnet, der das von der Lichtquelle 10 abgestrahlte Licht, das durch das transparente Substrat 2 gefallen ist, d.h. die gebrochenen Lichtstrahlen 6'' und die ungebrochenen Lichtstrahlen 6', erfaßt. Der optische Detektor 12 kann dabei eine herkömmliche Kamera, beispielsweise eine CCD-Kamera sein.

Bei der dargestellten Konfiguration, bei der die Lichtquelle 10, das Substrat 2 sowie die Kamera 12 in einer "Linie" angeordnet sind, werden durch den optischen Detektor 12 sehr helle bzw. weiße Bildbereiche dort erzeugt, wo keine Flüssigkeitströpfchen 4 auf das Substrat 2 aufgebracht sind. Dort sieht die Kamera 12 einen weißen Hintergrund. An den anderen Stellen, an denen Mikrotropfen, beispielsweise das Mikrotröpfchen 4, vorliegen, wird das Licht, wie oben beschrieben wurde, gebrochen, wobei die Mikrotröpfchen wie Mikrolinsen wirken, die die gesamte Umgebung in die Kamera abbilden. Da die Umgebungshelligkeit wesentlich dunkler ist, verglichen mit dem durch die Lichtquelle erzeugten Licht, erscheinen die Mikrotröpfchen 4 auf dem durch die Kamera 12 erzeugten Bild als sehr dunkle Bereiche, wie in Fig. 2 schematisch bei 14 gezeigt ist.

Dabei bilden die Mikrotröpfchen die gesamte Umgebung in die Kamera ab, so daß auch die Lichtquelle abgebildet wird, die als kleiner Lichtpunkt 16 in der Mitte des durch das Mikrotröpfchen erzeugten dunklen Bereichs erscheint. Somit bewirkt das Mikrotröpfchen 4 eine Abbildung, wie sie schematisch mit dem Bezugszeichen 14 und 16 in Fig. 2 bezeichnet ist. Schematisch ist diese Abbildung ferner durch dunkle Bereiche 18 in dem optischen Detektor 12 dargestellt.

Der in Fig. 2 gezeigte Aufbau liefert somit sehr kontrastreiche Bilder, bei denen sehr dunkle Mikrotröpfchen vor einem sehr hellen Hintergrund erscheinen.

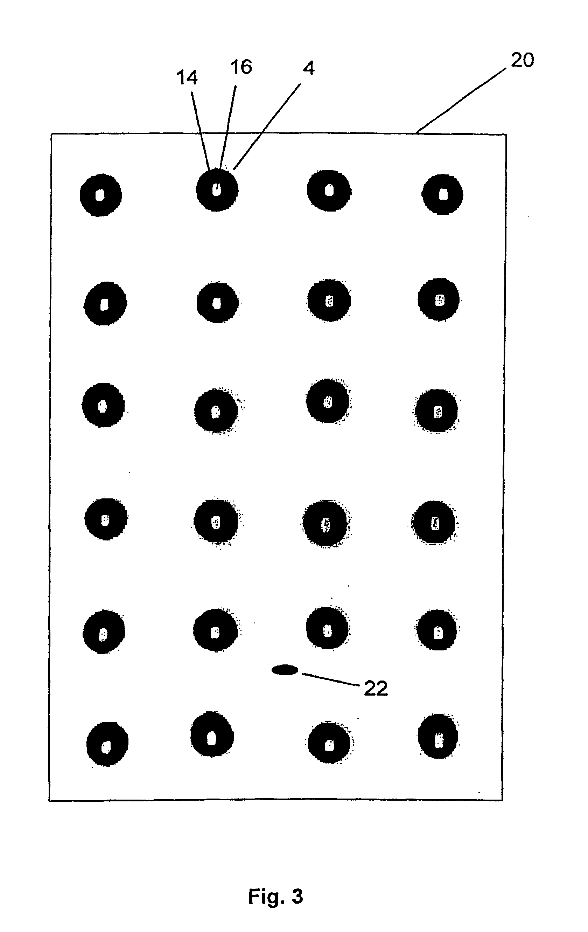

Ein Bild 20 eines Mikroarrays, das durch einen derartigen Aufbau aufgenommen wurde, ist in Fig. 3 gezeigt, wobei das Mikroarray aus 4 x 6 Mikrotröpfchen, d.h. 24 Mikrotröpfchen besteht, wobei in Fig. 3 lediglich eines mit dem Bezugszeichen 4 bezeichnet ist. Wie in Fig. 3 zu sehen ist, erzeugt jedes der Mikrotröpfchen in dem Bild einen dunklen Punkt 14, in dessen Mitte ein kleiner Lichtpunkt 16, der durch die Abbildung der Lichtquelle erzeugt wird, erkennbar ist. Durch diesen Lichtpunkt lassen sich in einem derart erzeugten Bild, das in Fig. 3 gezeigt ist, Staubpartikel sehr gut von Flüssigkeitströpfchen unterscheiden. Staubpartikel erzeugen bei einem Aufbau, wie er in Fig. 2 gezeigt ist, einen dunklen Punkt, ohne einen kleinen Lichtpunkt in der Mitte desselben. Ein solcher Punkt ist beispielsweise bei 22 in Fig. 3 gezeigt. Ein solcher Punkt 22 kann durch eine geeignete Bildverarbeitungseinrichtung ohne weiteres von den Punkten, die einen hellen Fleck in deren Mitte aufweisen, unterschieden werden, so daß es möglich ist, automatisch Mikrotröpfchen von Staubpartikeln zu unterscheiden.

An dieser Stelle ist anzumerken, daß Staubpartikel mit einem definierten zentrischen Loch, das einen Lichtpunkt ähnlich dem, wie er durch Mikrotröpfchen erzeugt wird, erzeugen würde, extrem unwahrscheinlich sind, so daß durch den oben beschriebenen Effekt flüssige Objekte, die einen Linseneffekt erzeugen, eindeutig von Festkörpern, die keinen Linseneffekt erzeugen, unterschieden werden können.

Es ist anzumerken, daß kleinere Staubpartikel aufgrund des direkten Gegenlichts bei dem Aufbau, wie er in Fig. 2 gezeigt ist, komplett überstrahlt werden, so daß diese von der Bildverarbeitung nicht erfaßt werden, und somit auch nicht gefiltert werden müssen. Dagegen kann, wie oben beschrieben wurde, ein durch ein größeres Staubpartikel erzeugter Punkt 22 durch geeignete Filtermechanismen aus dem Bild herausgefiltert werden.

Das in Fig. 3 dargestellte Bild kann nach der Aufnahme desselben hinsichtlich des Vorliegens, der Position und/oder der Größe von Mikrotröpfchen analysiert werden.

Die beschriebene Anordnung ist im Gegensatz zu konventionellen Systemen extrem unempfindlich gegenüber Streulicht oder der allgemeinen Raumhelligkeit, da die Helligkeit des Streulichts oder die allgemeine Raumhelligkeit vernachlässigbar gegenüber der Helligkeit des Hintergrunds sind. Dies ist dadurch bedingt, daß die Kamera sozusagen direkt in die Lichtquelle blickt, wie deutlich Fig. 2 zu entnehmen ist.

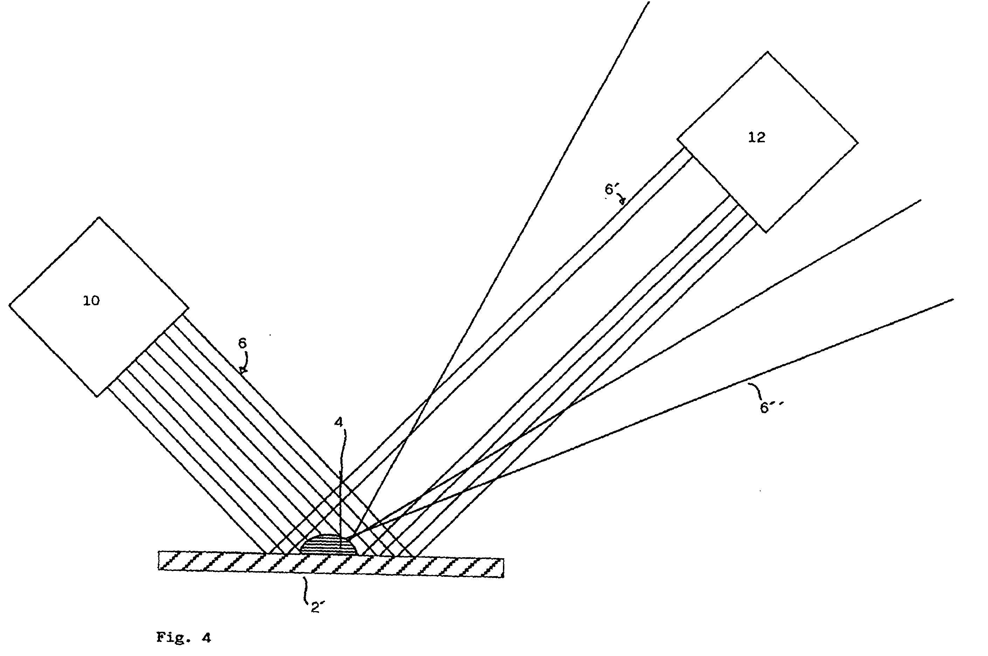

Ein alternatives Ausführungsbeispiel einer erfindungsgemäßen Vorrichtung ist in Fig. 4 gezeigt. Bei diesem Ausführungsbeispiel sind die Lichtquelle 10 und die Bilderzeugungseinrichtung 12 auf der gleichen Seite eines reflektierenden bzw. zumindest teilweise reflektierenden Substrats 2' angeordnet. Das von der Lichtquelle 10 erzeugte Licht 6 wird ohne Störung am Substrat 2' in die Bilderzeugungseinrichtung 12 reflektiert, sofern es nicht die Mikrotröpfchen passiert, wie durch die Strahlen 6' schematisch dargestellt ist. Treffen die Strahlen 6 dagegen auf die Tröpfchen 4, so wirken die Tröpfchen 4 wieder wie Linsen, die die Lichtstrahlen in einen großen Raumwinkel hinein verteilen, wie schematisch durch die Strahlen 6'' gezeigt ist. Diese Lichtstrahlen werden überwiegend die Bilderzeugungseinrichtung 12 verfehlen. Für die Bilderzeugungseinrichtung 12 erscheinen daher die Tröpfchen 4 wiederum sehr dunkel im Vergleich zu den Bereichen des Substrats ohne Tröpfchen.

Die oben beschriebenen erfindungsgemäßen Anordnungen können durch den Einsatz von zusätzlichen Linsen weiter optimiert werden, wobei diese Linsen derart eingesetzt werden, daß die flächige Lichtquelle möglichst gut in die Kamera abgebildet wird. Daneben ist es möglich, Umlenkspiegel einzubauen, entweder zwischen das transparente Substrat 2 und die Lichtquelle 10 oder zwischen das transparente Substrat 2 und den optischen Detektor 12, so daß die räumliche Anordnung der einzelnen Elemente flexibel ist.

Die vorliegende Erfindung ermöglicht somit die kostengünstige und funktionssichere Qualitätskontrolle von auf ein Substrat aufgebrachten Mikrotröpfchen, wobei dieselbe insbesondere zur Qualitätskontrolle bei der Herstellung von Mikroarrays geeignet ist. Dabei eignet sich die vorliegende Erfindung insbesondere zur Online-Qualitätskontrolle wobei durch die Zuverlässigkeit derselben Fehler bei der Prozeßkontrolle minimiert werden können.

## Patentansprüche

1. Vorrichtung zur Qualitätskontrolle von auf ein Substrat (2; 2') aufgebrachten Mikrotröpfchen (4), mit folgenden Merkmalen:
einer Lichtquelle (10) zum Beleuchten des Substrats (2; 2'), auf das die Mikrotröpfchen (4) aufgebracht sind;
einer Bilderzeugungseinrichtung (12) zum Aufnehmen des von der Lichtquelle (10) erzeugten, durch das Substrat (2) gefallenen oder von dem Substrat (2') reflektierten Lichts zum Erzeugen eines Bilds (20);
einer Einrichtung zum Identifizieren von Mustern (14, 16) in dem Bild (20), die durch einen Linseneffekt, der durch die konvex gekrümmte Oberfläche von auf das Substrat (2, 2') aufgebrachten transparenten Mikrotröpfchen (4) bewirkt wird, erzeugt werden; und
einer Einrichtung zur Analyse des erzeugten Bilds (20) auf der Grundlage der identifizierten Muster hinsichtlich des Vorliegens, der Position und/oder der Größe von auf das Substrat (2; 2') aufgebrachten Mikrotröpfchen (4), wobei Mikrotröpfchen (4) durch das Muster (14, 16) von Festkörperpartikeln (22) unterschieden werden.

2. Vorrichtung nach Anspruch 1, bei der das Substrat (2) ein transparentes Substrat ist und die Bilderzeugungseinrichtung (12) angeordnet ist, um durch das Substrat gefallenes Licht aufzunehmen.

3. Vorrichtung nach Anspruch 2, bei der die Lichtquelle (10) und die Bilderzeugungseinrichtung (12) einander gegenüberliegend angeordnet sind, wobei das transparente Substrat (2) zwischen denselben positionierbar ist.

4. Vorrichtung nach Anspruch 1, bei der das Substrat (2') ein reflektierendes Substrat ist und die Bilderzeugungseinrichtung (12) angeordnet ist, um von dem Substrat reflektiertes Licht aufzunehmen.

5. Vorrichtung nach einem der Ansprüche 1 bis 4, bei der die Lichtquelle eine homogene räumlich ausgedehnte Beleuchtung erzeugt.

6. Vorrichtung nach einem der Ansprüche 1 bis 5, die ferner eine Linsenanordnung zum optimalen Abbilden der räumlich ausgedehnten Lichtquelle (10) in die Bilderzeugungseinrichtung (12) aufweist.

7. Vorrichtung nach einem der Ansprüche 1 bis 6, die ferner Umlenkspiegel aufweist.

8. Verfahren zur Qualitätskontrolle von auf ein Substrat (2; 2') aufgebrachten Mikrotröpfchen (4), mit folgenden Schritten:
a) Beleuchten des Substrats (2; 2'), auf das die Mikrotröpfchen (4) aufgebracht sind, mit einer Lichtquelle (10);
b) Aufnehmen des von der Lichtquelle (10) erzeugten, durch das Substrat (2) gefallenen oder von dem Substrat (2') reflektierten Lichts zum Erzeugen eines Bilds (20);
c) Identifizieren von Mustern (14, 16) in dem Bild (20), die durch einen Linseneffekt, der durch die konvex gekrümmte Oberfläche von auf das Substrat (2, 2') aufgebrachten transparenten Mikrotröpfchen bewirkt wird, erzeugt werden; und
d) Analysieren des Bilds (20) auf der Grundlage der identifizierten Muster hinsichtlich des Vorliegens, der Position und/oder der Größe von auf das Substrat aufgebrachten Mikrotröpfchen (4), wobei Mikrotröpfchen (4) durch das Muster (14, 16) von Festkörperpartikeln (22) unterschieden werden.

9. Verfahren nach Anspruch 8, bei dem das Substrat (2) ein transparentes Substrat ist und im Schritt b) durch das Substrat (2) gefallenes Licht aufgenommen wird.

10. Verfahren nach Anspruch 8, bei dem das Substrat (2') ein transparentes Substrat ist und im Schritt b) durch das Substrat (2') reflektiertes Licht aufgenommen wird.

11. Verfahren nach einem der Ansprüche 8 bis 10, bei dem die Mikrotröpfchen (4) durch in einer Trägerlösung gelöste Substanzen gebildet sind.

## Claims

1. A device for controlling the quality of microdroplets (4) deposited on a substrate (2; 2'), comprising:
a light source (10) for illuminating the substrate (2, 2') on which the microdroplets (4) are deposited;
an image generation device (12) for receiving the light which has been produced by the light source (10) and which has fallen through the substrate (2) or reflected by the substrate (2') so as to generate an image (20); and
means for identifying in said image (20) patterns (14, 16) which are created by a refractive effect produced by the convex surface of transparent microdroplets (4) deposited on the substrate (2, 2'); and
means for analyzing the generated image (20) on the basis of the identified patterns with respect to the presence, the position and/or the size of microdroplets (4) deposited on the substrate (2; 2'), microdroplets (4) being discriminated from solid particles (22) by said pattern (14, 16).

2. A device according to claim 1, wherein the substrate (2) is a transparent substrate and the image generation device (12) is arranged such that it is adapted to receive light that has fallen through said substrate.

3. A device according to claim 2, wherein the light source (10) and the image generation device (12) are arranged in opposed relationship with each other, the transparent substrate (2) being adapted to be positioned therebetween.

4. A device according to claim 1, wherein the substrate (2') is a reflecting substrate and the image generation device (12) is arranged such that it is adapted to receive light reflected by said substrate.

5. A device according to one of the claims 1 to 4, wherein the light source produces a homogeneous, diffuse illumination.

6. A device according to one of the claims 1 to 5, which additionally comprises a lens arrangement for forming an optimum image of the diffuse light source (10) in the image generation device (12).

7. A device according to one of the claims 1 to 6, which additionally comprises reflecting mirrors.

8. A method for controlling the quality of microdroplets (4) deposited on a substrate (2; 2'), comprising the steps of:
a) illuminating, by means of a light source (10), the substrate (2; 2') having the microdroplets (4) deposited thereon;
b) receiving the light which has been produced by the light source (10) and fallen through the substrate (2), or reflected by the substrate (2'), so as to generate an image (20);
c) identifying in said image (20) patterns (14, 16) which are created by a refractive effect produced by the convex surface of transparent microdroplets deposited on the substrate (2, 2'); and
d) analyzing the image (20) on the basis of the identified patterns with respect to the presence, the position and/or the size of microdroplets (4) deposited on the substrate, microdroplets (4) being discriminated from solid particles (22) by said pattern (14, 16).

9. A method according to claim 8, wherein the substrate (2) is a transparent substrate and light which has fallen through said substrate (2) is received in step b).

10. A method according to claim 8, wherein the substrate (2') is a transparent substrate and light which has been reflected by said substrate (2') is received in step b).

11. A method according to one of the claims 8 to 10, wherein the microdroplets (4) are formed by substances dissolved in a carrier solution.

## Revendications

1. Dispositif pour le contrôle de la qualité de microgouttelettes (4) appliquées sur un substrat (2 ; 2'), comprenant les caractéristiques suivantes :
une source lumineuse (10) pour éclairer le substrat (2.; 2') sur lequel sont appliquées les microgouttelettes (4) :
un dispositif de formation d'image (12) pour enregistrer la lumière générée par la source lumineuse (10) qui pénètre dans le substrat (2) ou qui est réfléchie par le substrat (2'), pour former une image (20) ;
un dispositif pour identifier des modèles (14, 16) dans l'image (20) qui sont générés par un effet de lentille qui est mis en oeuvre par la surface de microgouttelettes transparentes (4) appliquées sur le substrat (2, 2') présentant une courbure convexe ; et
un dispositif pour analyser l'image obtenue (20), sur base du modèle identifié, en ce qui concerne la présence, la position et/ou la dimension de microgouttelettes (4) appliquées sur le substrat (2 ; 2'), dans lequel on opère une distinction entre des microgouttelettes (4) et des particules de corps solides (22) via le modèle (14, 16).

2. Dispositif selon la revendication 1, dans lequel le substrat (2) est un substrat transparent et le dispositif de formation d'image (12) est disposé de façon à enregistrer la lumière qui pénètre dans le substrat.

3. Dispositif selon la revendication 2, dans lequel la source lumineuse (10) et le dispositif de formation d'image (12) sont disposés dans une relation face-à-face, le substrat transparent (2) pouvant venir se positionner entre eux.

4. Dispositif selon la revendication 1, dans lequel le substrat (2') est un substrat réfléchissant et le dispositif de formation d'image (12) est disposé de façon à enregistrer la lumière réfléchie par le substrat.

5. Dispositif selon l'une quelconque des revendications 1 à 4, dans lequel la source lumineuse génère un éclairage soumis à une expansion homogène dans l'espace.

6. Dispositif selon l'une quelconque des revendications 1 à 5, qui présente en outre un agencement de lentille pour une représentation optimale de la source lumineuse (10) soumise à une expansion dans l'espace dans le dispositif de formation d'image (12).

7. Dispositif selon l'une quelconque des revendications 1 à 6, qui présente en outre un miroir de déviation.

8. Procédé pour le contrôle de la qualité de microgouttelettes (4) appliquées sur un substrat (2 ; 2'), comprenant les étapes suivantes consistant à :
a) éclairer le substrat (2 ; 2'), sur lequel sont appliquées les microgouttelettes (4), avec une source lumineuse (10) ;
b) enregistrer la lumière générée par la source lumineuse (10), qui pénètre dans le substrat (2) ou qui est réfléchie par le substrat (2'), pour former une image (20) ;
c) identifier des modèles (14, 16) dans l'image (20) qui sont générés par un effet de lentille qui est mis en oeuvre par la surface de microgouttelettes transparentes appliquées sur le substrat (2, 2'), qui présente une courbure convexe ; et
d) analyser l'image (20), sur base des modèles identifiés, en ce qui concerne la présence, la position et/ou la dimension de microgouttelettes (4) appliquées sur le substrat, dans lequel on opère une distinction entre des microgouttelettes (4) et des particules de corps solides (22) via le modèle (14, 16).

9. Procédé selon la revendication 8, dans lequel le substrat (2) est un substrat transparent et, dans l'étape (b), on enregistre la lumière qui pénètre à travers le substrat (2).

10. Procédé selon la revendication 8, dans lequel le substrat (2') est un substrat transparent et, dans l'étape (b), on enregistre la lumière réfléchie par le substrat (2').

11. Procédé selon l'une quelconque des revendications 8 à 10, dans lequel les microgouttelettes (4) sont formées par des substances dissoutes dans une solution de support.
